# DEMANDE DE BREVET EUROPEEN

(11) **EP 1 092 880 A1**
(43) Date de publication de la demande: **18.04.2001**
(21) Numéro de dépôt: 00402800.7
(22) Date de dépôt: 11.10.2000
(51) Int. Cl.: F16B 5/02, F16B 17/00

(54) **Système à rattrapage de jeu pour fixer deux pièces l'une à l'autre au moyen d'un organe de fixation du type à vis**

(30) Priorité: 12.10.1999 FR 9912683
(71) Demandeur: HUTCHINSON, 75008 Paris (FR)
(72) Inventeur: Baes, Patrick, 45120 Corquilleroy (FR)
(74) Mandataire: Doireau, Marc

(57) **Abrégé**

Système à rattrapage de jeu pour fixer deux pièces (P1,P2) l'une à l'autre au moyen d'un organe de fixation (V) d'axe (X-X) du type à vis destiné à être engagé au travers d'un premier trou (3) de l'une des pièces ou première pièce (P1) et venir coopérer avec un second trou (5) de l'autre des pièces ou seconde pièce (P2), le système comprenant un dispositif de liaison (15) ayant des moyens de serrage (16, 20, 38) pour retenir la première pièce (P1) le long du dispositif de liaison (15) en une position qui varie en fonction de la distance séparant les deux trous (3,5), caractérisé en ce que le dispositif de liaison (15) comprend également une bague (22) qui est rapportée dans le premier trou (3) avec un jeu (j) pour permettre un mouvement relatif entre les deux pièces (P1, P2) une fois qu'elles sont fixées l'une à l'autre.

## Description

L'invention concerne un système à rattrapage de jeu pour fixer deux pièces l'une à l'autre au moyen d'un organe de fixation du type à vis destiné à être engagé au travers d'un premier trou de l'une des pièces et venir coopérer avec un second trou de l'autre des pièces.

Lorsque des pièces doivent être assemblées entre elles ou sur un support par des moyens de fixation tel qu'une vis ou un boulon, elles sont formées avec des trous qui ont des diamètres ou des dimensions transversales internes sensiblement égaux et adaptés aux dimensions des organes de fixation, ces trous devant être axialement alignés pour que la fixation soit possible.

Cet alignement des trous est parfois difficile à réaliser, notamment lorsque les tolérances dimensionnelles des pièces à assembler sont relativement larges. Cela amène à former dans au moins l'une des pièces un trou élargi ayant un diamètre notablement supérieur à celui de l'organe de fixation, la différence entre les diamètres de ce trou et de l'organe de fixation correspondant au maximum acceptable de défaut d'alignement des trous.

Quand cette différence de diamètre est relativement faible, on peut utiliser un organe de fixation dont la tête a un diamètre extérieur supérieur à celui du trou élargi de la pièce correspondante et on peut aussi associer une rondelle ou analogue à l'organe de fixation, dont la tête prend appui sur la rondelle. Cela permet de monter l'organe de fixation dans un trou dont le diamètre, plus petit que le diamètre extérieur de la rondelle, peut être aussi grand ou plus grand que le diamètre extérieur de la tête de l'organe de fixation.

D'une manière générale, le trou élargi peut avoir des dimensions telles que l'organe de fixation puisse être réglable en position dans un plan perpendiculaire à l'axe de fixation. On peut ainsi compenser le défaut d'alignement entre les deux trous des pièces à assembler.

Cependant, la compensation du défaut d'alignement des deux trous des pièces à fixer l'une à l'autre ne résout pas tous les problèmes. En effet, les deux pièces ne sont pas nécessairement au voisinage immédiat l'une de l'autre et, dans ce cas, on utilise généralement une patte de fixation intermédiaire ou des entretoises intercalaires traversées par l'organe de fixation pour compenser la distance séparant les deux trous. De telles solutions ne sont que des compromis adaptés au cas par cas, c'est-à-dire qu'elles ne résultent pas d'une solution globale.

Le but de l'invention est de concevoir un système à rattrapage de jeu dans lequel on puisse au moins assurer un réglage suivant l'axe de fixation des deux pièces, c'est-à-dire que l'on puisse tendre vers un système à rattrapage de jeu suivant trois directions.

A cet effet, l'invention propose un système à rattrapage de jeu pour fixer deux pièces l'une à l'autre au moyen d'un organe de fixation du type à vis destiné à être engagé au travers d'un premier trou de l'une des pièces ou première pièce et venir coopérer avec un second trou de l'autre des pièces ou seconde pièce, le système comprenant un dispositif de liaison ayant des moyens de serrage pour retenir la première pièce le long du dispositif de liaison en une position qui varie en fonction de la distance séparant les deux trous, et qui est caractérisé en ce que le dispositif de liaison comprend également une bague qui est rapportée dans le premier trou avec un jeu pour permettre un mouvement relatif entre les deux pièces une fois qu'elles sont fixées l'une à l'autre.

A titre d'exemple, la bague présente une gorge périphérique dont le diamètre intérieur est inférieur au diamètre du premier trou pour permettre le mouvement relatif entre les deux pièces.

D'une manière générale, le dispositif de liaison comprend un manchon qui est traversé de part en part par l'organe de fixation, la bague est montée autour du manchon et le manchon comprend des moyens de serrage aptes à fixer en position la bague le long du manchon.

Selon un premier mode de réalisation, les moyens de serrage sont constitués par un anneau élastiquement déformable qui est intercalé ente deux éléments d'extrémité.

Selon une variante, les moyens de serrage sont constitués par le manchon qui est en un matériau élastiquement déformable.

Selon un second mode de réalisation, les moyens de serrage sont constitués par une rondelle rigide disposée obliquement par rapport à l'axe du manchon et interposée entre deux éléments d'extrémité, les faces d'extrémité adjacentes des deux éléments d'extrémité étant biseautées suivant un angle de 30° à 60°, par exemple.

D'une manière avantageuse, le rattrapage de jeu suivant l'axe de fixation pour compenser la distance séparant les deux trous est automatique sans avoir à réaliser un quelconque réglage, et les moyens de serrage pour retenir la première pièce le long du dispositif de liaison peuvent être commandés directement par l'organe de fixation, c'est-à-dire sans avoir recours à un moyen complémentaire bien que cela puisse être envisagé.

D'une manière générale, le dispositif de liaison s'étend sur une longueur supérieure à la distance séparant les deux pièces, prend appui sur la seconde pièce, traverse le trou de la première pièce, est tubulaire et traversé de part en part par l'organe de fixation.

Ainsi, un tel système permet d'assurer un rattrapage de jeu suivant l'axe de fixation des deux pièces et suivant un plan perpendiculaire à cet axe de fixation, c'est-à-dire suivant trois directions, ainsi qu'un mouvement relatif entre les deux pièces une fois qu'elles sont fixées l'une à l'autre.

Un système de fixation à rattrapage de jeu selon l'invention présente notamment l'avantage d'être d'une conception simple, facile à manoeuvrer à partir du seul organe de fixation et de pouvoir être utilisé tel quel sans être obligé de l'adapter au cas par cas.

Un tel système de fixation trouve application dans de nombreux domaines de l'industrie pour fixer deux pièces l'une à l'autre, ou une pièce tel qu'un tuyau sur un support,...

D'autres avantages, caractéristiques et détails de l'invention ressortiront de la description explicative qui va suivre en référence aux dessins annexés, donnés à titre d'exemple dans lesquels :
- la figure 1 est une vue en coupe axiale d'un système de fixation à rattrapage de jeu monté entre deux pièces et selon un premier mode de réalisation de l'invention avant l'opération de fixation,
- la figure 2 est une demi-vue similaire à celle de la figure 1 après l'opération de fixation,
- la figure 3 est une vue en coupe axiale d'une variante du premier mode de réalisation illustré à la figure 1,
- la figure 4 est une vue de dessus de la figure 3, et
- les figures 5 et 6 sont des vues en coupe axiale d'un système de fixation à rattrapage de jeu selon un second mode de réalisation de l'invention, avant et après l'opération de fixation.

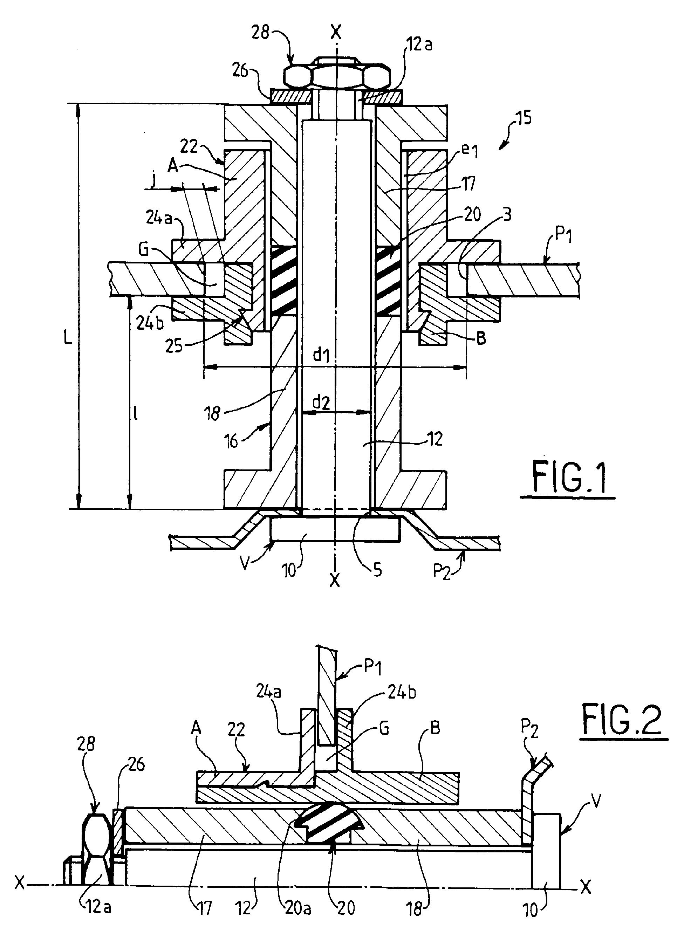

En se référant à la figure 1, soit une première pièce P1 à fixer sur une seconde pièce P2. La pièce P1 est percée d'un trou 3 qui doit être mis en correspondance avec un trou 5 percé dans la pièce P2. Un organe de fixation tel qu'une vis V d'axe X-X est destiné à s'engager dans ces deux trous 3 et 5 pour fixer les deux pièces P1 et P2 l'une à l'autre.

D'une manière générale, les deux trous 3 et 5 sont situés dans deux plans parallèles séparés l'un de l'autre d'une distance I.

La vis de fixation V comprend une tête 10 prolongée axialement par une tige 12 ayant une extrémité filetée 12a. Le trou 3 percé dans la pièce P1 a un diamètre d1 qui est supérieur au diamètre d2 de la tige 12.

Le système à rattrapage de jeu selon l'invention comprend un dispositif de liaison 15 qui est destiné à être engagé au travers du trou 3 de la pièce P1 pour venir en appui autour du trou 5 de la pièce P2. Ce dispositif de liaison 15 est traversé par la tige 12 et s'étend sur une longueur L qui est supérieure à la distance I séparant les deux trous 3 et 5.

Plus précisément, le dispositif de liaison 15 comprend un manchon de serrage 16 qui est constitué de trois éléments tubulaires, à savoir deux éléments d'extrémité 17 et 18 en un matériau relativement rigide et un anneau central 20 en un matériau élastiquement déformable. Ces trois éléments sont traversés librement par la tige 12. D'une manière générale, les trois éléments 17,18 et 20 du manchon 16 ont globalement les mêmes diamètres intérieurs et extérieurs, leurs diamètres intérieurs étant légèrement supérieurs au diamètre de la tige 12.

Le dispositif de liaison 15 est complété par une bague 22 qui est montée librement autour du manchon 16 et retenue dans le trou 3 de la pièce P1. Cette bague 22 comporte à sa périphérie deux collerettes 24a et 24b qui sont séparées l'une de l'autre d'une distance correspondant sensiblement à l'épaisseur de la pièce P1. Ces deux collerettes 24a et 24b délimitent entre elles une gorge périphérique G dans laquelle vient se loger la partie de la pièce P1 située autour du trou 3 de manière à retenir la bague 22 au moins selon l'axe X-X. Pour assurer le montage de la bague 22 dans le trou 3, la bague 22 peut être scindée en deux parties A et B respectivement introduites de part et d'autre du trou 3 et assemblées l'une à l'autre par encliquetage par exemple, comme cela est schématisé en 25 sur la figure 1.

Concrètement et à titre d'exemple, les deux pièces P1 et P2 sont fixées l'une à l'autre de la manière décrite ci-après.

La bague 22 est rapportée dans le trou 3 de la pièce P1. La tige 12 de la vis V est engagée par le trou 5 de la pièce P2 et traverse la bague 22 jusqu'à ce que sa tête 10 vienne sensiblement en appui contre la pièce P2 d'une part, et que son extrémité filetée 12a s'engage au travers du trou 3 de la pièce P1 d'autre part. Ensuite, on vient enfiler les trois éléments 17,18 et 20 du manchon 16 du dispositif de liaison 15 sur la tige 12, l'élément d'extrémité 18 venant en appui sur la pièce P2 autour du trou 5. Enfin, on rapporte une rondelle 26 puis un écrou 28 sur l'extrémité filetée 12a de la tige 12.

La longueur L sur laquelle s'étend le manchon 16 doit être supérieure à la distance l séparant les deux pièces P1 et P2, pour avoir un rattrapage automatique de la distance variable l qui peut séparer les deux pièces P1 et P2. En outre, les longueurs respectives des trois éléments 17,18 et 20 du manchon doivent être adaptées pour que l'anneau élastique 20 se trouve toujours en regard de la bague 22. Un compromis peut être trouvé en donnant à la bague 22 par exemple une longueur supérieure à celle de l'anneau 20 ou inversement.

Une fois la bague 22, la vis V et le manchon 16 mis en place, on notera la présence d'un jeu e1 entre le manchon 16 et la bague 22.

Pour fixer les deux pièces P1 et P2 l'une à l'autre, il faut solidariser le manchon 16 à la pièce P2 d'une part, et le manchon 16 à la bague 22 afin de compenser au moins le jeu e1 existant entre eux d'autre part.

A cet effet, il suffit de faire tourner la tête de vis 10 et/ou l'écrou 28 (figure 2) de manière à comprimer axialement l'anneau élastique 20 du manchon 16 par suite d'un rapprochement l'un de l'autre des deux éléments d'extrémité 17 et 18 du manchon 16. L'expansion radiale qui résulte de la mise en compression axiale de l'anneau 20 lui permet de venir en contact serré avec la paroi interne de la bague 22 en les rendant ainsi solidaires l'un de l'autre.

L'expansion radiale de l'anneau 20 s'effectue tant en direction de la bague 22 que de la tige 12. Aussi, selon un mode de réalisation avantageux illustré sur la figure 2, on peut donner à l'anneau élastique 20 une forme telle que son expansion radiale se fasse essentiellement en direction de la bague 22 pour obtenir un meilleur serrage.

A cet effet, l'anneau 20 peut présenter un bourrelet 20a à sa périphérie lui donnant ainsi une forme de T en section droite.

Cependant, comme la bague 22 n'est que retenue à la pièce P1 sans être solidaire de celle-ci, les pièces P1 et P2 peuvent avoir un mouvement relatif entre elles dans un plan perpendiculaire à l'axe de fixation X-X.

Dans l'exemple décrit précédemment, on a supposé qu'une fois la bague 22 montée et retenue dans le trou 3 de la pièce P1, ladite bague était sensiblement axialement alignée avec le trou 5 de la pièce P2 de manière à pouvoir engager librement l'organe de fixation V à travers le manchon du dispositif de liaison 15.

Pour pallier le désalignement possible entre la bague 22 et le trou 5, le trou 3 de la pièce P1 dans lequel vient se monter la bague 22 peut avoir des dimensions suffisamment élargies pour rattraper le désalignement. Ce rattrapage de jeu j est indiqué sur la figure 1 et correspond globalement à la différence des diamètres du fond de la gorge G de la bague 22 et du trou 3.

Ainsi, il est possible d'obtenir un rattrapage de jeu suivant trois directions ou suivant les trois axes d'un repère orthonormé.

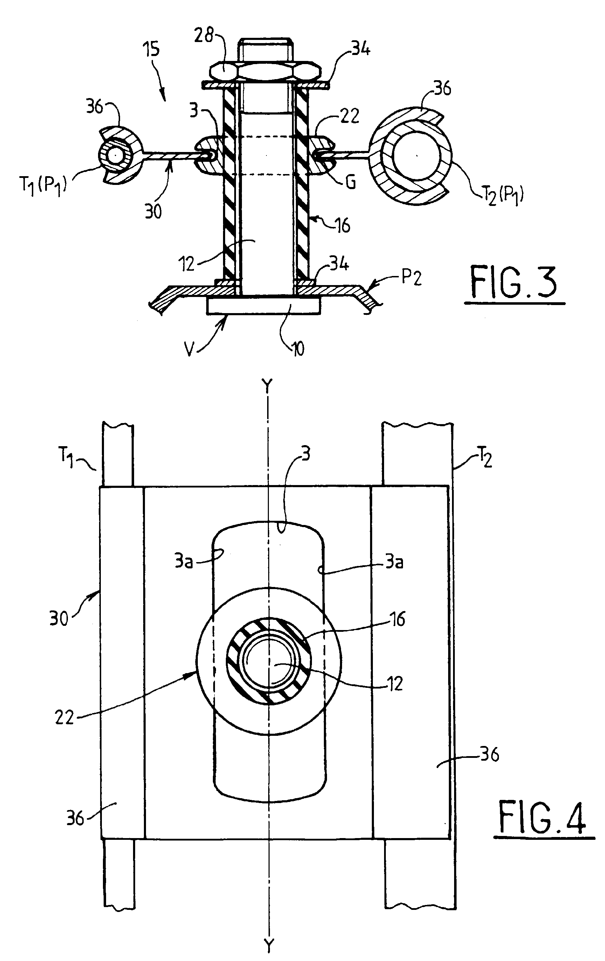

Sur les figures 3 et 4, on a illustré une variante du premier mode de réalisation décrit précédemment.

D'une manière générale, le manchon de serrage 16 du dispositif de liaison 15 est d'une seule pièce et en un matériau élastiquement déformable. Dans ce cas, la longueur du manchon 16 correspond sensiblement à la distance maximum qui peut séparer les pièces P1 et P2. A titre d'exemple, le manchon 16 s'étend sur une longueur de l'ordre de 5cm.

La bague 22, qui est réglable en position le long du manchon 16, peut être également d'une seule pièce avec sa gorge G directement usinée dans la pièce ou venue de moulage. Selon cette variante, la pièce P1 que l'on désire fixer à la pièce P2 est constituée par deux tubes ou tuyaux T1 et T2. Dans ce cas, on prévoit une pièce de support intermédiaire entre la bague 22 et les deux tubes T1 et T2.

Plus précisément, ce support intermédiaire est constitué par une plaquette 30 qui est percée d'une ouverture oblongue 3. Cette ouverture 3 est notamment délimitée par deux bords rectilignes et parallèles 3a qui sont séparés l'un de l'autre d'une distance supérieure au diamètre intérieur de la gorge G de la bague 22, de manière à ce que la bague 22 puisse se déplacer librement dans cette ouverture oblongue 3.

La plaquette 30 est suffisamment souple pour permettre le montage à force de la bague 22 dans l'ouverture oblongue 3, ou inversement.

Ainsi, la compression axiale du manchon 16 par la vis de serrage V entraîne une expansion radiale du manchon 16, notamment dans sa partie qui traverse la bague 22, ce qui a pour effet de fixer en position la bague 22 le long du manchon 16.

On peut prévoir la présence de deux rondelles métalliques 34 à chaque extrémité du manchon 16, ces rondelles 34 pouvant être rendues solidaires du manchon.

Les deux tubes T1 et T2 qui forment la pièce P1 sont fixés à la plaquette 30 par encliquetage par exemple au moyen de deux pattes 36 à section droite en arc de cercle et qui épousent en partie la forme des tubes T1 et T2, sachant que d'autres systèmes de fixation peuvent être utilisés, par collage par exemple.

Selon cette variante de réalisation, on peut assurer un réglage au moins suivant deux dimensions, à savoir : suivant l'axe X-X de la vis V d'une part et suivant l'axe longitudinal Y-Y de l'ouverture 3, et suivant trois directions si la largeur de l'ouverture oblongue 3 est supérieure au diamètre interne de la gorge G.

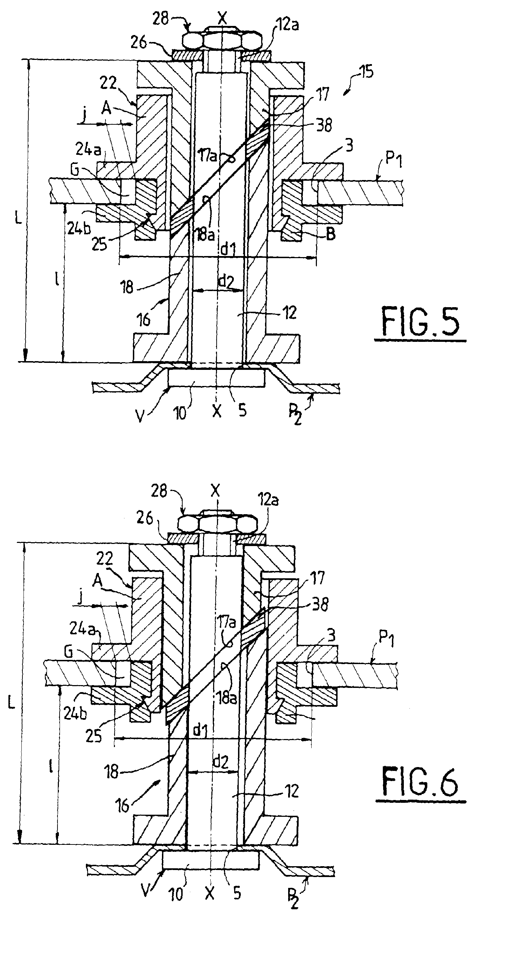

Selon un second mode de réalisation illustré sur les figures 5 et 6, le serrage entre le manchon 16 et la bague 22 est obtenu par un effet de coincement. Autrement dit, l'anneau 20 élastiquement déformable est supprimé et remplacé par une rondelle 38 en un matériau qui est également relativement rigide.

Les deux extrémités 17a et 18a en regard des deux éléments d'extrémité 17 et 18 sont biseautées suivant un angle compris entre 30° et 60° et viennent au contact des deux faces de la rondelle 38, de sorte que cette dernière est disposée obliquement par rapport à l'axe du manchon 16. Les faces d'extrémité biseautées 17a et 18a ne doivent présenter aucune rugosité de manière à permettre aux deux éléments d'extrémité 17 et 18 de pouvoir glisser au contact de la rondelle 38 et de se décaler axialement l'un de l'autre dans deux directions opposées par rapport à l'axe de fixation X-X.

En effet, la rotation de la tête de vis 10 et/ou de l'écrou 28 va provoquer un décalage axial entre les deux éléments d'extrémité 17 et 18 qui vont venir respectivement en contact serré avec la paroi interne de la bague 22 et la tige 12 (figure 6). Plus précisément, l'élément d'extrémité 17 vient en contact serré avec la bague 22, alors que l'autre élément d'extrémité 18 vient en contact serré avec la tige 12.

D'une manière générale, les pièces P1 et P2 peuvent être quelconques, sachant que la pièce P1 peut être une patte de fixation solidaire de la pièce à fixer à la pièce P2 pour tenir compte de l'encombrement du milieu environnant.

En outre, le trou 5 de la pièce P2 n'est pas nécessairement un trou traversant, mais peut être un trou borgne percé dans un support.

## Revendications

1. Système à rattrapage de jeu pour fixer deux pièces (P1,P2) l'une à l'autre au moyen d'un organe de fixation (V) d'axe (X-X) du type à vis destiné à être engagé au travers d'un premier trou (3) de l'une des pièces ou première pièce (P1) et venir coopérer avec un second trou (5) de l'autre des pièces ou seconde pièce (P2), le système comprenant un dispositif de liaison (15) ayant des moyens de serrage (16, 20, 38) pour retenir la première pièce (P1) le long du dispositif de liaison (15) en une position qui varie en fonction de la distance séparant les deux trous (3,5), caractérisé en ce que le dispositif de liaison (15) comprend également une bague (22) qui est rapportée dans le premier trou (3) avec un jeu (j) pour permettre un mouvement relatif entre les deux pièces (P1, P2) une fois qu'elles sont fixées l'une à l'autre.

2. Système selon la revendication 1, caractérisé en ce que la bague (22) présente une gorge périphérique (G) dont le diamètre intérieur est inférieur au diamètre du premier trou (3).

3. Système selon la revendication 2, caractérisé en ce que le premier trou (3) est de forme oblongue.

4. Système selon l'une quelconque des revendications précédentes, caractérisé en ce que le dispositif de liaison (15) comprend un manchon (16) qui est traversé de part en part par l'organe de fixation (V), et en ce que la bague (22) est montée autour du manchon (16).

5. Système selon la revendication 4, caractérisé en ce que le manchon (16) comprend des moyens de serrage (16, 20, 38) aptes à fixer en position la bague (22) le long du manchon (16).

6. Système selon la revendication 5, caractérisé en ce que les moyens de serrage sont constitués par un anneau (20) élastiquement déformable qui est intercalé entre deux éléments d'extrémité (17, 18).

7. Système selon la revendication 5, caractérisé en ce que les moyens de serrage sont constitués par le manchon (16) en un matériau élastiquement déformable.

8. Système selon la revendication 5, caractérisé en ce que les moyens de serrage sont constitués par une rondelle rigide (38), disposée obliquement par rapport à l'axe du manchon et interposée entre deux éléments d'extrémité (17, 18).

9. Système selon la revendication 8, caractérisé en ce que les faces d'extrémité adjacentes (17a, 18a) des deux éléments d'extrémité (17, 18) sont biseautées suivant un angle de 30° à 60°.

10. Système selon l'une quelconque des revendications précédentes 4 à 9, caractérisé en ce que l'organe de fixation (V) prend respectivement appui sur les deux extrémités du manchon (16).

11. Système selon l'une quelconque des revendications précédentes, caractérisé en ce que le dispositif de liaison (15) s'étend sur une longueur (L) supérieure à la distance (l) séparant les deux trous (3, 5).

12. Système selon l'une quelconque des revendications précédentes, caractérisé en ce que le dispositif de liaison (15) prend appui sur la seconde pièce (P2) et traverse le trou (3) de la première pièce (P1).
